# EUROPEAN PATENT APPLICATION

(11) **EP 4 282 925 A1**
(43) Date of publication of application: **29.11.2023**
(21) Application number: 22174756.1
(22) Date of filing: 23.05.2022
(51) Int. Cl.: C09C 1/36, B42D 25/00, C09D 7/62, G01N 23/22

(54) **POST-TREATED TITANIUM DIOXIDE PIGMENT WITH AT LEAST ONE SECURITY FEATURE**

(71) Applicant: KRONOS INTERNATIONAL, INC., 51373 Leverkusen (DE)
(72) Inventor: Mersch, Frank, 42799 Leichlingen (DE); Bendzko, Norbert, 51375 Leverkusen (DE); Medved, Mitja, 51375 Leverkusen (DE)

(57) **Abstract**

The invention relates to a pigment particle possessing at least one security feature, a method for obtaining the same, and a suspension comprised of the pigment particle. In addition, the invention refers to a method for marking a product with a pigment particle according to the invention and the use of a pigment particle for marking and verifying said pigment particle.

## Description

### Field of the invention

The invention relates to a pigment particle possessing at least one security feature, a method for obtaining the same, and a suspension comprised of the pigment particle. In addition, the invention refers to a method for marking a product with a pigment particle according to the invention and the use of a pigment particle for marking and verifying said pigment particle.

### Technological background of the invention

Fake products pose an increasing challenge worldwide and result in major financial losses for the manufacturers of the original products. This does not merely apply to manufactured final products of a specific value, but also to semi-final products such as fibers used in the production of bank notes and valuable documents of any kind. There is consequently a great interest in techniques and methods that can be used for identifying and verifying original goods. There are several approaches in this context discussed in the following.

One possible approach is to mark the original product. For example, a bar code can be applied onto the to-be-protected product or onto its packaging. However, bar codes are state of the art nowadays, and can be easily copied. Another example is the addition of a material to the product such as code-bearing microparticles or fluorescent, phosphorescent, or radioactive substances. Commonly, the fluorescent and phosphorescent substances absorb UV light and remit it at a longer wavelength usually in the visible spectrum. Fluorescent compounds are widely spread and are available at low costs such as quinine. The materials can either be subsequently applied to the products, to their packaging, or added during production. For instance, the document DE 100 83 295 T1 describes a method where a carpet product is provided with a marker. The latter is mixed into a customary protective fluid which is then applied to the carpet product as a protective layer. In another method, inks that are transparent in visible light are applied to the outside of documents, and their presence or absence is detected by means of ultraviolet or infrared fluorescence. In another application, a fluorescent dye is added to the plastic of compact discs for marking purposes.

Alternatively, the raw materials or semi-finished products used for product manufacture can also be marked. In the method described in U.S. Pat. No. 6,035,914, fibers are mixed with a fluorescent dye in such a way that they display fluorescent, dichroic behavior when irradiated with electromagnetic radiation of the appropriate wavelength. These fibers can be used in paper for producing bank notes or laminated into plastic products such as credit cards.

A further approach is to mark titanium dioxide particles, the latter is commonly used in high-end white applications. For example, US 2007/0298059 A1 describes titanium dioxide particles which are marked with a marker substance, the latter is either present in the lattice of the particles or firmly bound to the surface of the titanium dioxide with the aim of preventing detachment by, for example, washing. When applied onto a valuable product, a sample of the titanium dioxide particle together with the marker can be analyzed by common analytical methods in a laboratory such as by X-ray fluorescence analysis, OCP mass spectrometry and atomic emission spectroscopy.

All of the discussed approaches have in common that the markings can be easily copied and are thus ineffective or are usually not detectable without special analytical methods involving bulky apparatuses which cannot be easily transported to the place of investigation. When special analytical methods have to be applied, a specimen has to be analyzed by a laboratory in order to determine the origin of the product. In particular, the sample collection and the transportation to the laboratory is time-consuming. In addition, it would be desirable to determine the origin of the product on sight where the product is investigated such as in a warehouse or at customs.

### Object and summary of the invention

It is the object of the invention to provide a pigment particle with at least one security feature which cannot be easily copied and provides protection against product piracy.

This object is achieved by the present invention.

The pigment particle according to the invention comprises a titanium dioxide pigment particle and at least one layer applied on said titanium dioxide pigment particle wherein the layer is doped with at least one lanthanide. The present invention uses the third-harmonic generation phenomena in which three photons of the same frequency provoke the radiation of a photon triple the energy of the initial three photons in a nonlinear optical process. The medium in which this phenomenon occurs is in the case of the present invention the titanium dioxide pigment particle. The light of the NIR source possess a single wavelength or a wavelength range of between 1,100 nm and 2,000 nm, preferably of between 1,200 nm and 1,800 nm. The photon triple the energy possesses the wavelength with the activation energy of the least one lanthanide which then radiates a photon of a specific length in the visible range of light which is then detected and used for identification and verification of the pigment particle. It can be detected by the human eye or by a spectrometer.

As a result, the invention provides a sophisticated solution to the above formulated technical problem which cannot be easily copied or circumvented. In particular, common fluorescent pigments and dyes absorbs UV light and emit lights in the visible range such as the organic quinine, but do not adsorb NIR light. Advantageously, the verification of the pigment particle can be accomplished in a narrow time frame of a few seconds by a NIR source of a single wavelength or a wavelength range such as a lamp which can be easily transported and handled. There is thus no need for a time-consuming verification including a sample collection and transport to a laboratory equipped with bulky apparatuses which cannot be moved to the spot of the to-be-verified product such as in a warehouse or at customs.

In addition to the security feature based upon the third-harmonic generation phenomena depending on the employed lanthanide emitting light in the visible spectrum described above, the lanthanide can also adsorb UV light from an external source and emit light in the visible range. Further, the pigment particle may comprise other security features such as a marker or may be applied in the form of a bar-code providing a unique combination of features as described further below.

Therefore, in a first aspect, the invention relates to a pigment particle comprised of a titanium dioxide pigment particle and at least one layer applied on said titanium dioxide pigment particle, characterized in that the layer is doped with at least one lanthanide.

In a second aspect, the invention is directed to a method for identifying and verifying the pigment particle according to any one of claims 1 to 8 comprising the steps of a) exposing the pigment particle according to any one of claims 1 to 8 to an NIR source emitting a single wavelength or a wavelength range of between 1,100 nm and 2,000 nm, preferably of between 1,200 nm and 1,800 nm, and b) detecting the emitted light.

In a further aspect, the present invention refers to a suspension comprised of a pigment particle as described herein.

In another aspect, the present invention relates to a method for marking a product with a pigment particle by using the pigment particle as disclosed herein.

In a final aspect, the invention is directed to the use of a pigment particle according as described herein for marking and verifying said pigment particle comprising the following steps:
a) recording information about the pigment particle comprising the at least one lanthanide and preferably at least one marker.
b) applying the pigment particle on a product.
c) testing the pigment particle applied on the product to determine whether it contains the lanthanide and preferably the at least one marker; and
d) comparing the results of the test to the recorded information to determine whether the product contains the at least one lanthanide and preferably the at least one marker.

Further advantageous embodiments of the invention are stated in the dependent claims.

### Description of the invention

These and other aspects, features and advantages of the invention become obvious to the skilled person from the study of the following detailed description and claims. Each feature from one aspect of the invention can be employed in any other aspect of the invention. Numerical ranges stated in the format "from x to y" or "between x and y" include the mentioned values and the values that are within the respective measuring accuracy as known to the skilled person. If several preferred numerical ranges are stated in this format, it is a matter of course that all ranges formed by the combination of the various end points are also included.

The pigment particle of the present invention is comprised of a titanium dioxide pigment particle and at least one layer applied on said titanium dioxide pigment particle, and the at least one layer is doped with at least one lanthanide. "Titanium dioxide pigment particle", as used herein, refers to a titanium dioxide pigment particle obtained by the sulphate or chloride process which is optionally milled. Further, said particle may be present in the crystal structures of rutile, anatase or brookite, usually in the crystal structures of rutile or anatase. Anatase is particularly suitable as compared to rutile, as rutile absorbs UV radiation in the range of about 350 nm to 400 nm. Preferably, said titanium dioxide pigment particle consists of at least 98 wt.%, preferably of at least 99 wt.% anatase referred to the total weight of said particle. The pigment particle of the present invention further comprises at least one layer. Precursors and techniques to form such at least one layer are known in the art. The at least one layer is doped with at least one lanthanide. "Lanthanide", as used herein, refers to the established definition of lanthanides and pertains to the series of chemical elements which comprises the fifteen metallic chemical elements with the atomic numbers 57 to 71.

Within the scope of the invention, the titanium dioxide pigment particle has a primary size such that it scatters the visible light is scatter, ideally to a high rate. The particle size is the mass-related median d50 (hereinafter: d50) of from 200 nm to 400 nm determined by disc centrifuge.

Preferably, on the layer, which is applied on titanium dioxide pigment particle, a further layer is applied.

In another preferred embodiment of the invention, the layer and the further layer of the pigment particle are independently selected from the group consisting of silicon dioxide, aluminum oxide, zirconium oxide, and a mixture thereof. It is noted that said oxides also include respective hydroxides, oxyhydroxides and respective water-containing phases.

Further, the pigment particle preferably comprises a final layer which comprises a silicon based organic compound. "Final layer", as defined herein, is the outmost layer of the pigment particle. Such compounds can be selected from siloxanes, silanes and alcohols such as the commercially available Tegomer DA 640, trimethylolpropane (TMP), octyl trichlorosilane (OCTCS), octyltriethoxysilane (OCTEO) or etidronic acid.

The layer of the pigment particle is doped with a lanthanide. Preferably, the lanthanide is selected from the group consisting of lanthanum, cerium, praseodymium, neodymium, promethium, samarium, europium, gadolinium, terbium, dysprosium, holmium, erbium, thulium, ytterbium, and lutetium. More preferably, the lanthanide is selected from the group consisting of europium, cerium, samarium, erbium, praseodymium, and neodymium.

The layer applied on the titanium dioxide pigment particle is doped with 100 ppm to 100,000 ppm, preferably 1,000 ppm to 50,000 ppm of a lanthanide. The afore-mentioned amount of dopants guarantees that first sufficient dopant is present to provoke the radiation of the light in the visible range which is sufficient to be detected and second the white color properties of the pigment particle are not negatively affected, and the intrinsic color of the lanthanide is not recognizable.

In a particularly preferred embodiment of the invention, the titanium dioxide pigment particle is present in the crystal structure anatase, and the layer is doped with at least one lanthanide europium, preferably europium(III) such as europium(III)oxide, respective hydroxides, oxyhydroxides, respective water-containing phases.

The present invention uses the third-harmonic generation phenomena in which three photons of the same frequency provoke the radiation of a photon triple the energy of the initial photons in a nonlinear optical process. The medium in which this phenomenon occurs is in the case of the present invention the titanium dioxide pigment particle. The light of the NIR source possess a single wavelength or a wavelength range of between 1,100 nm and 2,000 nm, preferably of between 1,200 nm and 1,800 nm. The photon triple the energy possesses the wavelength with the activation energy of the least one lanthanide which then radiates a photon of a specific wavelength in the visible spectrum, which is then detected by, e.g., the human eye or a spectrometer, and used for identification and verification of the pigment particle. For example, europium(III)oxide fluoresces between 613 nm and 618 nm and can thus be activated with a NIR source emitting photons with a wavelength of between 1,839 nm and 1,854 nm. The visible spectrum is the portion of the electromagnetic spectrum that is visible to the human eye and possesses a wavelength from about 380 nm to about 750 nm.

In another preferred embodiment of the present invention, the pigment particle is doped with at least one marker. This marker is present in the crystal lattice and can be incorporated during the manufacture of said pigment particle according to the sulphate or chloride process. The at least one marker is selected from the group consisting of lanthanides, hafnium, tantalum, yttrium, zinc, molybdenum, tungsten, gallium, germanium, tin, and scandium, preferably from the group consisting of yttrium, zinc, molybdenum, tungsten, germanium, tin, and scandium. The marker can be detected by common detection methods to be used for the marker substances yield unequivocal, repeatable results. Examples of suitable methods include X-ray fluorescence analysis (XRF), atomic absorption spectroscopy (MS), atomic emission spectroscopy (flame AES, ICP-AES), neutron activation analysis (NM) and ICP mass spectrometry (ICP-MS). The marker is a further security feature in addition to the lanthanide.

In another aspect, the invention is directed to a method for identifying and verifying the pigment according to the present invention, the method comprises the steps of a) exposing the pigment particle according to the present invention to an NIR source emitting a single wavelength or a wavelength range of between 1,100 nm and 2,000 nm, preferably of between 1,200 nm and 1,800 nm, and b) detecting the emitted light. The methods of this invention can be used to verify authentic product and to identify product forgeries (product piracy), to track distribution channels, or to identify the pigment particle used to counter unjustified complaints.

Preferably, the titanium dioxide pigment particle is doped with at least one marker as described herein. This can be used as a further security feature and can be combined with various lanthanide used as dopants in the layer providing a unique combination. Thus, in a preferred embodiment, the method comprises the step c) which is testing the pigment particle as to whether it comprises the marker. Suitable methods are disclosed herein and known in the art. Suitable methods for analyzing the marker are known to the skilled person.

Suitable NIR sources can be selected from the group consisting of sun, lamp, band filtered continuing light sources, light emitting semiconductors such as LEDs and lasers, preferably a lamp, band filtered continuing light sources, light emitting semiconductors such as LEDs and lasers. In this context a NIR source with a single wavelength is preferred. The emitted light can be detected by the human eye or a spectrometer.

The method according to the invention, for identifying and verifying of products containing titanium dioxide pigment particles, is suitable for use in, for example, the fields of fibers for textiles, papers for documents, bank notes and currency, in the pharmaceutical sector, and also for plastics, paints and coatings. In the textile fibers sector, the pigment particle can, for example, be used to mark special, high-quality fibers, and the products made of them, and protect them against imitation. In addition, manufacturers of high-quality, branded garments can identify fakes by using fiber fabrics delustered with correspondingly pigment particles in their products. As a fiber delustering agent, titanium dioxide is conventionally used in the range of 0.3 wt.% to 1.0 wt.% referred to the total weight of the fiber. High-quality papers contain titanium dioxide pigment in the pulp or in the coating, usually in a concentration of up to 10.0 wt.%. The pigment particle according to the present invention can be employed in the production of special papers, e.g., for identity cards, certificates or bank notes, in order to identify forgeries and also to track the distribution channels of the papers-even of individual batches-for example. As titanium dioxide is also used in pharmaceuticals as whitening agent and also as base layer on which a colorful layer can be applied, as a brightener in tablets or for pigmenting the surface coating of medications in the form of coated tablets, usually in quantities of up to roughly 3 wt.% referred to the total weight of the coating. With the approach of the invention, fakes can be distinguished from the original pharmaceuticals, and it is furthermore again possible to track the distribution channels, even of individual production batches. In the plastics sector, the teaching of the present invention can assist the pigment manufacturer in distinguishing between its own pigments and third-party pigments in the plastic end product, and to defend itself against unjustified compensation claims in connection with complaints, e.g., relating to discoloration of PVC window profiles. In the field of paints and coatings, too, e.g., in vehicle refinish paints or other high-quality coatings, the pigment manufacturer can identify its own and third-party pigments with the help of the pigment marking.

"Product", as used herein, refers to a tangible subject matter usually manufactured by an industrial process or that is grown or obtained by farming, and offered for sale. This definition also includes subject matter obtained by non-industrial processes like art creating such as, but not limited to, paintings, sculptures, and photographs.

In a further aspect, the invention refers to a suspension comprised of a pigment particle according to the present invention which can be used to mark the to-be-protected product. For example, the suspension can be printed as an ink in the form of a logo, trademark or bar code. The latter is preferred as it would add a further security feature.

The suspension may comprise 0.1 wt.% to 90.0 wt.%, preferably 1.0 wt.% to 75 wt.%, more preferably 5 wt.% to 50 wt.%, and even more preferably 8.0 wt.% to 20.0 wt.% pigment particles with respect to the total weight of the suspension.

Preferably, the suspension is an ink, more preferably an aqueous ink. The ink may comprise 0.1 wt.%, to 20.0 wt.%, preferably 5.0 wt.%, to 15.0 wt.% and more preferably 8.0 wt.%, to 12.0 wt.% of the pigment particles with respect to the total weight of the ink. Suitable additives known in the art may be added to the ink. They can be selected from the group consisting of a viscosity modifier, a water-miscible organic solvent, a surfactant, a defoamer, a biocide, a humectant, an electrostatic dispersant, an electrosteric dispersant and steric dispersant.

In yet another aspect, the present invention refers to a method for marking a product with a pigment particle using the pigment particle disclosed herein. This method comprises commonly known and well-established methods and techniques and may involve printing and labeling.

In a final aspect, the present invention pertains to the use of a pigment particle according to the present invention for marking and verifying pigment particles comprising the following steps:
a) recording information about the pigment particle comprising the at least one lanthanide and preferably at least one marker.
b) applying the pigment particle on a product.
c) testing the pigment particle applied on the product to determine whether it contains the lanthanide and preferably the at least one marker; and
d) comparing the results of the test to the recorded information to determine whether the product contains the at least one lanthanide and preferably the at least one marker.

## Claims

1. A pigment particle comprised of a titanium dioxide pigment particle and at least one layer applied on said titanium dioxide pigment particle, **characterized in that**
the layer is doped with at least one lanthanide.

2. The pigment particle according to claim 1, **characterized in that**
on the layer, which is applied on titanium dioxide pigment particle, a further layer is applied.

3. The pigment particle according to claim 1 or 2, **characterized in that**
the layer and the further layer are independently selected from the group consisting of silicon dioxide, aluminum oxide, zirconium oxide, and a mixture thereof.

4. The pigment particle according to any one of claims 1 to 3, **characterized in that** the lanthanide is selected from the group consisting of lanthanum, cerium, praseodymium, neodymium, promethium, samarium, europium, gadolinium, terbium, dysprosium, holmium, erbium, thulium, ytterbium, and lutetium, preferably selected from the group consisting of europium, cerium, samarium, erbium, praseodymium, and neodymium.

5. The pigment particle according to any one of claims 1 to 4, **characterized in that**
the layer applied on titanium dioxide pigment particle is doped with 100 ppm to 100,000 ppm, preferably 1,000 ppm to 50,000 ppm of a lanthanide.

6. The pigment particle according to any one of claims 1 to 5, **characterized in that** titanium dioxide pigment particle is doped with at least one marker.

7. The pigment particle according to claim 6, **characterized in that**
the at least one marker is selected from the group consisting of lanthanides, hafnium, tantalum, yttrium, zinc, molybdenum, tungsten, gallium, germanium, tin, and scandium, preferably from the group consisting of yttrium, zinc, molybdenum, tungsten, germanium, tin, and scandium.

8. The pigment particle according to any one of claims 1 to 7, **characterized in that**
the titanium dioxide pigment particle is present in the crystal structure anatase, and the layer is doped with europium, preferably europium(III).

9. A method for identifying and verifying the pigment particle according to any one of claims 1 to 8 comprising the following steps:
a) exposing the pigment particle according to any one of claims 1 to 8 to an NIR source emitting a single wavelength or a wavelength range of between 1,100 nm and 2,000 nm, preferably of between 1,200 nm and 1,800 nm, and
b) detecting the emitted light.

10. The method according to claim 9 is comprised of the following step:
c) testing the pigment particle as to whether it comprises the marker.

11. The method according to claim 9 or 10, **characterized in that**
NIR source is selected from the group selected from sun, lamp, band filtered continuing light sources, light emitting semiconductors.

12. A suspension comprised of a pigment particle according to any one of claims 1 to 8.

13. The suspension according to claim 12, **characterized in that**
the suspension is an ink; and
a) the ink is an aqueous ink, and/or
b) the ink comprises 0.1 wt.%, to 20.0 wt.%, preferably 5.0 wt.%, to 15.0 wt.% and more preferably 8.0 wt.%, to 12.0 wt.% of the pigment particles with respect to the total weight of the ink, and/or
c) the ink comprises at least one additive selected from the group consisting of a viscosity modifier, a water-miscible organic solvent, a surfactant, a defoamer, a biocide, a humectant, an electrostatic dispersant, an electrosteric dispersant and steric dispersant.

14. A method for marking a product with a pigment particle by using the pigment particle according to any one of claims 1 to 8.

15. A use of a pigment particle according to any one of claims 1 to 8 for marking and verifying said pigment particle comprising the following steps:
a) recording information about the pigment particle comprising the at least one lanthanide and preferably at least one marker.
b) applying the pigment particle on a product.
c) testing the pigment particle applied on the product to determine whether it contains the lanthanide and preferably the at least one marker; and
d) comparing the results of the test to the recorded information to determine whether the product contains the at least one lanthanide and preferably the at least one marker.
